# EUROPEAN PATENT APPLICATION

(11) **EP 4 718 036 A1**
(43) Date of publication of application: **01.04.2026**
(21) Application number: 24202470.1
(22) Date of filing: 25.09.2024
(51) Int. Cl.: G01D 4/00

(54) **DEVICE FOR READING UTILITY METERS**

(71) Applicant: nanoGrid bv, 9320 Aalst (BE)
(72) Inventor: De Smedt, Joost, 9340 Lede (BE); Vande Velde, Pjotr, 1840 Londerzeel (BE); Matthys, Timour, 9260 Wichelen (BE); De Smedt, Iwein, 9300 Aalst (BE); Walker, Duncan, Walton-on-Thames, KT12 4DA (GB)
(74) Representative: De Clercq & Partners

(57) **Abstract**

The present invention relates to a device, method and system for reading utility meters and thereby enabling the display of consumption data at predetermined intervals. This information is beneficial for users as it provides a clear and detailed overview of electricity, water, gas, heat, and other consumptions. An aspect of the present invention relates to a device for reading a utility meter with a display that includes readout information, the device comprising a housing configured for mounting the device onto the utility meter at an angle relative to the display; a camera unit comprising an image sensor configured for capturing imaging data; at least one reflective surface configured to reflect an image of the display towards the image sensor; at least one lens mounted on a mount, arranged between the image sensor and the reflective surface, wherein the lens is configured to focus the reflected image ; and a processing unit configured to receive an output imaging dataflow from the camera unit, including the readout information from the display, from the camera unit, and storing the output imaging dataflow on a memory unit.

## Description

### FIELD OF THE INVENTION

The present invention relates to a device, method, and system for reading utility meters, thereby enabling the display of consumption data at predetermined intervals. This capability provides users with a clear and detailed overview of various utilities, including electricity, water, gas, heat, and others.

### BACKGROUND

Utility meters that lack an accessible data interface, commonly referred to as non-readable meters, pose a significant challenge in the completion of various projects. The absence of a direct data retrieval method from these meters often leads to incomplete project data and inefficiencies.

To address these issues, several alternative solutions exist, including requesting pulse output from the Distribution Network Operator (DNO), setting up a data export, installing duplicate meters, replacing the existing meters, and employing clamp-on devices. However, these methods are frequently time-consuming, costly, and labor-intensive.

Given these limitations, there is a clear and pressing need for a more streamlined, effective, and cost-efficient solution that addresses the shortcomings of current methodologies. An innovative approach capable of overcoming the limitations of existing non-readable meters would provide substantial benefits in terms of accuracy, operational efficiency, and overall project reliability.

### SUMMARY OF THE INVENTION

It is an objective of the present invention to address the limitations of existing non-readable utility meters by providing a device capable of reading out data from existing non-readable meters and providing access to the consumption data. This device overcomes the limitations of existing solutions by providing a more straightforward and cost-effective method for obtaining accurate meter readings for existing non-readable meters, thereby enhancing efficiency and reducing costs. The device incorporates a mirror within the camera unit to create additional focus distance, advantageously applying the Scheimpflug principle to create a sharp image even when the camera unit (e.g. image sensor) is not positioned directly above the meter display. This angled setup, involving the mirror, camera unit and lens , ensures that the meter display is not obstructed, enabling easy reading or viewing of the display while the device is mounted onto the meter. By using this device, the need for replacing non-readable meters is eliminated, making it possible to utilize existing non-readable meters effectively and thereby improving their sustainability.

The below summary is provided to introduce a selection of key embodiments of the invention in a simplified form. These embodiments are described in further detail in the detailed description of the disclosure below. This summary is not intended to identify key features or essential features of the claimed subject matter, nor is it intended to be used to limit the scope of the claimed subject matter.

An aspect of the present invention relates to a device for reading a utility meter with a display that includes readout information, the device comprising:
- a housing configured for mounting the device onto the utility meter at an angle relative to the display; the housing comprising a plurality of walls forming the housing, including at least a top and a bottom wall;
- a camera unit comprising an image sensor configured for capturing imaging data; wherein the image sensor is arranged on the bottom wall of the housing;
- at least one reflective surface configured to reflect an image of the display towards the image sensor; wherein the reflective surface is arranged on the top wall of the housing, opposite to the image sensor;
- at least one lens mounted on a mount, arranged between the image sensor and the reflective surface, wherein the lens is configured to focus the reflected image, and wherein the mount is configured to adjust an orientation of the lens to focus the reflected image onto the image sensor; and,
- a processing unit configured to receive an output imaging dataflow, including the readout information from the display, from the camera unit, and storing the output imaging dataflow on a memory unit.

In some embodiments, the mount is configured to position the lens so that the plane of focus aligns with both the plane of the image sensor and the plane of the readout information on the meter display, in accordance with the Scheimpflug principle.

In some embodiments, the mirror is a flat mirror, a convex mirror and/or a concave mirror.

In some embodiments, at least a part of the side of the casing that is oriented toward the meter display is transparent to visible light.

In some embodiments, the device further comprises an illumination means, preferably a lighting strip.

In some embodiments, the mount is configured to adjust the angle of the lens relative to the camera unit (for example the image sensor) and the mirror between an angle of at least 0.5 to at most 10.0 degrees, preferably between an angle of at least 0.5 to at most 5.0 degrees, even preferably between 1.0 and 4.5 degrees, even more preferably between 1.1 and 4.0 degrees, more preferably between 1.2 and 3.5 degrees, more preferably between 1.3 and 3.0 degrees, more preferably between 1.4 and 2.5 degrees, more preferably between 1.5 and 2.0 degrees, for example 1.7 degrees.

In some embodiments, the device further comprises a server to access the output imaging dataflow and a datalink between the processing unit and the server for transmitting the output imaging dataflow to the server.

In some embodiments, the camera unit comprises a printed circuit board camera.

Another aspect of the present invention relates to a method for mounting the system according to any of the previous claims on a utility meter, the method comprising the steps of:
- providing the device as described herein;
- placing the housing on the utility meter such that the image sensor is oriented substantially parallel to the meter display and the front of the camera unit is facing in the same orientation as the meter display;
- positioning the lens in the mount, thereby positioning the lens such that the plane of focus intersects the plane of the image sensor and the plane of the readout information on the meter display.

In some embodiments, the method further comprises the step of capturing the readout information on the meter display in an imaging dataflow.

In some embodiments, the method further comprises the step of lighting the readout information on the meter display prior to capturing the readout information in the imaging dataflow.

In some embodiments, the method further comprises the step of transmitting the output imaging dataflow from the camera unit to the processing unit.

In some embodiments, the method further comprises the step of storing the output imaging dataflow on a memory unit or transmitting the output imaging dataflow to a datalogger and uploading the output imaging dataflow on a server.

In some embodiments, the method further comprises the step of compressing the output imaging dataflow, preferably prior to uploading the output imaging dataflow on the server. Another aspect of the present invention relates to a system comprising:
a utility meter with a display that includes readout information and
a device for reading out the display of the utility meter, comprising:
   - a housing configured for mounting the device onto the utility meter at an angle relative to the display; the housing comprising a plurality of walls forming the housing, including at least a top and a bottom wall;
   - a camera unit comprising an image sensor configured for capturing imaging data; wherein the image sensor is arranged on the bottom wall of the housing;
   - at least one reflective surface configured to reflect an image of the display towards the image sensor; wherein the reflective surface is arranged on the top wall of the housing, opposite to the image sensor;
   - at least one lens mounted on a mount, arranged between the image sensor and the reflective surface, wherein the lens is configured to focus the reflected image, and wherein the mount is configured to adjust an orientation of the lens to focus the reflected image onto the image sensor; and,
   - a processing unit configured to receive an output imaging dataflow, including the readout information from the display, from the camera unit, and storing the output imaging dataflow on a memory unit.

In some embodiments, the housing of the utility meter is configured to be positioned, or to be positionable, such that the image sensor is oriented substantially parallel to the meter display, with the front of the camera unit facing in the same direction as the meter display.

In some embodiments, the lens is adjusted or adjustable such that the focal plane intersects both the plane of the image sensor and the plane of the readout information on the meter display.

### DESCRIPTION OF THE FIGURES

The following description of the figures relate to specific embodiments of the disclosure which are merely exemplary in nature and not intended to limit the present teachings, their application or uses.
**FIG. 1** shows a perspective view of the device in accordance with aspects of the present invention.
**FIG. 2** shows a cross-section of the device of FIG. 1.
**FIG. 3** shows a perspective view of the mount included in the device of FIG. 1.
**FIG. 4** shows another perspective view of the device of FIG. 1 mountable onto a utility meter.

### DETAILED DESCRIPTION

An overview of various aspects of the technology of the present disclosure is given hereinbelow, after which specific embodiments will be described in more detail. This description is meant to aid the reader in understanding the technological concepts more quickly, but it is not meant to identify the most important or essential features thereof, nor is it meant to limit the scope of the present disclosure, which is limited only by the claims. Hence, present the description is to be regarded as illustrative in nature, and not as restrictive.

As set out above, the present invention relates to a device, method and system for reading utility meters and thereby enabling the display of consumption data at predetermined intervals. Advantageously, the utility meter is an existing utility meter, i.e., a pre-installed utility meter. By retrofitting or integrating with existing non-readable meters, the the present invention adds functionality, allowing for the retrieval and display of usage data without altering the core infrastructure.

To simplify the explanation, each of the basic components of the device as described herein and their embodiments will first be discussed with reference to the drawings. It should be noted, however, that any embodiment of the device also constitutes an embodiment of the method or system, and vice versa.

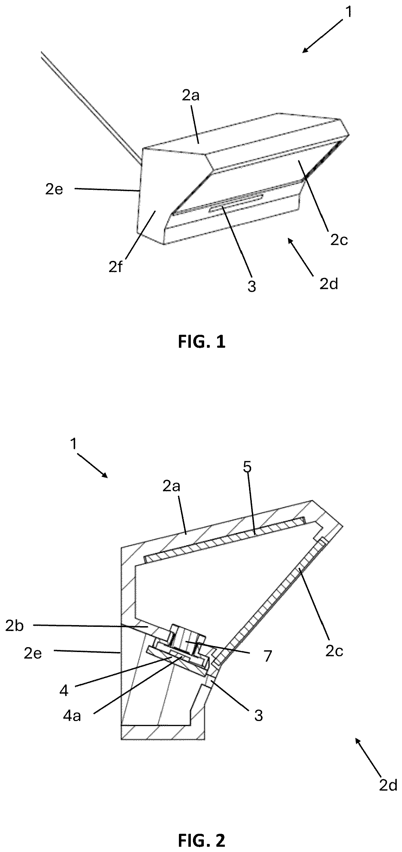

**FIG. 1** illustrates a perspective view of some of the basic components of a device 1 in accordance with aspects of the present invention. The device 1 is for reading a utility meter with a display, including at least the readout information, can comprise a housing 2 configured for mounting the device 1 onto the utility meter at an angle relative to the display of the utility meter. The housing 2 comprises a plurality of walls forming the housing 2, including at least a top 2a and a bottom wall 2b. The housing 2 can further comprise a front side 2d that is oriented towards the meter display, preferably at least a part 2c of the front side 2d of the housing 2 that is oriented toward the meter display is transparent to visible light. The housing 2 can further comprise a back wall 2e and side walls 2f that are connected to the top wall 2a and the bottom wall 2b to form a closed housing 2. Advantageously, such a housing shields the lens and camera unit from dust, debris, and moisture, which could otherwise accumulate and diminish image quality. The housing also provides physical protection from scratches, impacts, and wear, helping to extend the device's lifespan. By maintaining stable environmental conditions, it guards the lens and camera unit against temperature fluctuations and humidity that might cause condensation or fogging. This ensures the lens and camera unit's precision and performance can be preserved.

As further shown, the device 1 can further comprise an illumination means 3. In embodiments, the illumination means can be a light-emitting component, preferably integrated into the device, to enhance visibility of the display of the utility meter when capturing imaging data. The illumination means can be a light, or a lighting strip. Preferably the lighting strip is a Light Emitting Diode (LED) lighting strip. The illumination means can be configured for enhancing visibility of the display of the utility meter when capturing imaging data. In embodiments, the illumination means are integrated in the front side of the housing. The illumination means can be integrated in the front side of the housing below, above or on the side of the part of the front side that is transparent to visible light. Preferably the illumination means can be integrated in the front side of the housing below the part of the front side that is transparent to visible light. By integrating the illumination means in the housing the emitted light is effectively dispersed, providing clear and even illumination of the display of the utility meter. Furthermore, it also enhances the device's visual appeal.

**FIG.2** shows a cross-section of the device 1 in accordance with aspects of the present invention. The device 1 can comprise a camera unit 4 comprising an image sensor 4a configured for capturing imaging data. The image sensor 4a is arranged on the bottom wall 2b of the housing 2. As will be described in more detail below, the device 1 further comprises at least one reflective surface 5, such as a mirror, configured to reflect an image of the display towards the image sensor 4a. The reflective surface 5 can be arranged opposite to the image sensor 4a, preferably in the top wall 2a of the housing.

As will be described in more detail below, the device 1 can further comprise at least one lens 6 mounted on a mount 7, arranged between the image sensor 4a and the reflective surface 5. The lens is configured to focus the reflected image. The mount 7 is configured to position an orientation of the lens 6 to focus the reflected image onto the image sensor 4a. The mount 7 is preferably configured to position the lens 6 so that the plane of focus aligns with both the plane of the image sensor and the plane of the readout information on the meter display, in accordance with the Scheimpflug principle. In embodiments, the mount can be integrated into the housing of the device.

As will be described in more detail below, the device can further comprise a processing unit configured to receive an output imaging dataflow, including the readout information from the display, from the camera unit, and storing the output imaging dataflow on a memory unit.

In embodiments, the camera unit captures imaging dataflows at predetermined intervals, which can include every 60 minutes, every 45 minutes, every 30 minutes, every 25 minutes, every 20 minutes, every 15 minutes, or every 10 minutes. Additionally or alternatively, the camera unit can be configured to capture imaging dataflows on demand, according to instructions specifying intervals such as every 60 minutes, every 45 minutes, every 30 minutes, every 25 minutes, every 20 minutes, every 15 minutes, or every 10 minutes.

In embodiments, the reflective surface 5 extends at least over a part of the top wall 2a of the housing 2, preferably over the entire top wall 2a of the housing 2. In embodiments, the reflective surface 5 can be a flat, convex, concave or a combination thereof. The reflective surface can be a mirror, for example a flat mirror, a convex mirror, a concave mirror or a combination thereof. To enhance the quality of the image made by the camera unit and/or the size of the image, the reflective surface can advantageously comprise a convex and/or concave mirror.

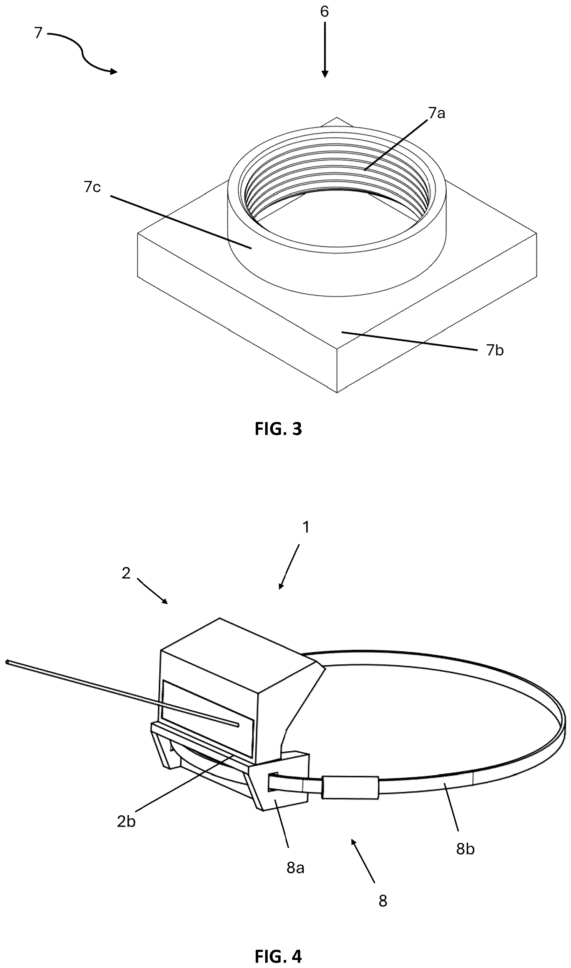

**FIG.3** shows a perspective view of the mount 7 of FIG.2. The mount is configured to adjust the height position of the lens relative to the camera unit and the mirror. The mount 7 can comprise a height adjusting means to adjust the height position of the lens relative to the camera unit and/or the mirror. Such height adjusting means can comprise a screw-based adjusting means 7a, where turning a threaded screw raises or lowers the lens with fine precision, or spring-loaded height adjusting means use a release mechanism to easily raise or lower the lens, with a latch that locks it in place, or manual sliding mounts with locking screws, where the lens can be moved along a vertical rail and locked at the preferred position. Preferably the height adjusting means comprise the screw-based adjusting means to ensure precise height control for optimal optical performance.

In embodiments, the mount 7 comprises a base 7b, preferably a flat base, with a tube 7c positioned on the base 7b. The tube 7c can comprise the height adjustment means, preferably the screw-based adjusting means 7a on the inside of the tube 7c. The mount can be configured to position the lens relative to the camera unit and the mirror at angle at least 0.5 to at most 10.0 degrees, preferably between an angle of at least 0.5 to at most 5.0 degrees, even preferably between 1.0 and 4.5 degrees, even more preferably between 1.1 and 4.0 degrees, more preferably between 1.2 and 3.5 degrees, more preferably between 1.3 and 3.0 degrees, more preferably between 1.4 and 2.5 degrees, more preferably between 1.5 and 2.0 degrees. The mount can be configured to position the lens relative to the camera unit and the mirror at an angle between 0.5 to 10.0 degrees, between 1.0 to 5.0 degrees, between 1.5 to 4.5 degrees, between 1.2 to 4.0 degrees, between 1.3 to 3.5 degrees, between 1.4 to 3.0 degrees, between 1.5 to 2.5 degrees, and ideally between 1.5 to 2.0 degrees.The mount can be configured to position the lens relative to the image sensor at an angle between 0.5 to 10.0 degrees, between 1.0 to 5.0 degrees, between 1.5 to 4.5 degrees, between 1.2 to 4.0 degrees, between 1.3 to 3.5 degrees, between 1.4 to 3.0 degrees, between 1.5 to 2.5 degrees, and ideally between 1.5 to 2.0 degrees.

The camera unit can comprise an image sensor, positioned on the bottom wall of the housing, that converts the incoming light into electrical signals, which can then be processed to form a digital image. In embodiments, the camera unit comprises a printed circuit board (PCB) camera. In embodiments, the image sensor may be a CCD (Charge-Coupled Device) or CMOS (Complementary Metal-Oxide-Semiconductor).

In embodiments, the device can further comprise a power supply, which may be provided through a wired connection, such as Power over Ethernet (PoE) or a 24V direct power input, or alternatively through a battery, such as a Lithium Thionyl Chloride battery. The wired power supply ensures a stable and continuous energy supply in locations with readily available power sources, while supplying powers with a battery enables the processing unit to be suitable for remote or power-limited locations where a wired connection is impractical. For example, by utilizing Lithium Thionyl Chloride batteries, the device can function autonomously for extended periods, potentially up to 10 years.

The device can further comprise a server to access the output imaging dataflow and a datalink between the processing unit and the server for transmitting the output imaging dataflow to the server.

The processing unit can either be integrated into the housing of the device or the camera unit or can be a separate module. In embodiments, the processing unit can be connected to the camera unit through a wired or wireless connection.

In embodiments, the processing unit can be equipped with a storage unit, preferably an integrated storage unit. In embodiments, the processing unit preferably supports a range of communication technologies, including Ethernet with Power over Ethernet (PoE), Narrowband loT (NB-loT), LTE-M, and LoRaWAN. This allows for flexible connectivity options depending on the specific application or network requirements.

In embodiments, the processing unit can further comprise a power supply, which may be provided through a wired connection, such as Power over Ethernet (PoE) or a 24V direct power input, or alternatively through a battery, such as a Lithium Thionyl Chloride battery. The wired power supply ensures a stable and continuous energy supply in locations with readily available power sources, while supplying powers with a battery enables the processing unit to be suitable for remote or power-limited locations where a wired connection is impractical.

As used herein, the term "server" refers to a computing system or device that provides access to the output imaging dataflow to other devices or systems over a network. The server can facilitate access and communication and exchange of the output imaging dataflow by receiving the output imaging dataflow, and delivering the output imaging dataflow when requested.

As used herein, the term "datalink" refers to a communication channel or interface that facilitates the transfer of dataflow the processing unit and the server. The datalink can serve as the conduit through which the output imaging dataflow is transmitted the processing unit and the server. The datalink may be implemented using various technologies, such as wired connections (e.g., cables or fiber optics) or wireless methods (e.g., radio waves or infrared signals).

As used herein, the term "processing unit" refers to a computational component or subsystem within a device responsible for executing instructions, and managing data to achieve specific functions or tasks. The processing unit operates based on software or firmware algorithms and processes input data to produce desired outputs. The processing unit may include elements such as a central processing unit (CPU), or a microprocessor for overall operation, controlling and coordinating various processes and functionalities to ensure effective performance.

To securely attach or mount the device to a utility meter, the device can be equipped with attachment means to ensure firm and stable attachment or mounting. These attachment means may include adjustable clamps that grip the meter securely with screws or levers, fixed or adjustable brackets that provide a stable platform for the device, and adhesive pads or strips. Advantageously, the adjustable clamps can be easy adapted or designed, for example by 3D printing, for different types of utility meters to ensure a firm and stable mounting of the device. **FIG.** 4 shows a perspective view of the device comprising attachment means according to an embodiment. Preferably, the attachment means 8 comprise a base 8a for mounting the device with its bottom wall onto the base and adjustable straps 8b that can be wrapped around the circumference of the utility meter 9 and easily adjusted to fit. These adjustable straps 8b offer flexibility, allowing for simple adjustment and removal as needed. These attachment means not only keep the device securely in place but also maintain proper alignment between the camera unit, lens, reflective surface, and meter display, ensuring accurate imaging dataflow capture and reliable operation. The adjustable straps 8b can be integrated on the base 8a, preferably on the side of the base. Alternatively attachment means can be integrated on the bottom wall of the housing, preferably at a height corresponding to the areas below the part of the front side that is transparent to visible light.

In an embodiment, the attachment means can be configured to attach the device or more specifically the housing onto the utility meter in a predetermined way. Advantageously, the device is attached in a way that the image sensor is oriented substantially parallel to the meter display, with the front of the camera unit facing in the same direction as the meter display. Following the attachment, the lens can be adjusted that the focal plane intersects both the plane of the image sensor and the plane of the readout information on the meter display.

Another aspect of the present invention relates to method for mounting the device according to any of the previous claims on a utility meter, the method comprising the steps of:
- providing a device as described herein;
- placing the housing on the utility meter such that the image sensor is oriented substantially parallel to the meter display and the front of the camera unit is facing in the same orientation as the meter display;
- positioning the lens in the mount, thereby orienting the lens such that the plane of focus intersects the plane of the image sensor and the plane of the readout information on the meter display.

In embodiments, when placing the housing onto the utility meter, the housing is placed such that the imaging sensor is place at a distance of at most 15.0 cm, at most 14.0 cm, at most 13.0 cm, at most 12.0 cm, at most 11.0 cm, at most 10.5 cm, at most 9.0 cm, at most 8.5 cm, at most 8.0 cm, at most 7.5 cm, at most 7.0 cm, at most 6.5 cm, at most 6.0 cm, at most 5.5 cm, at most 5.0 cm, at most 0.5 cm from the display. In embodiments, when placing the housing onto the utility meter, the housing is placed such that the imaging sensor is place at a distance of at least 3.0 cm, at least 3.5 cm, at least 4.0 cm, at least 4.5 cm, at least 5.0 cm, at least 5.5 cm from the display. In embodiments, when placing the housing onto the utility meter, the housing is placed such that the imaging sensor is place at a distance of between 8.0 cm and 2.5cm, between 7.0 cm and 2.5cm, between 8.0 cm and 2.5cm, between 15.0 cm and 2.5cm, between 14.0 cm and 2.5cm, between 13.0 cm and 3.0cm, between 12.0 cm and 3.5cm, between 11.0 cm and 4.0cm, between 10.0 cm and 4.5 cm, between 9.0 cm and 4.5cm, between 8.0 cm and 5.0cm.

In embodiments, when placing the housing on the utility meter, the housing is preferably placed next to or on the circumference of the utility meter. The device can be attached to the utility meter by using the attachment means. For example, the attachment means can comprise one or more adjustable straps. When attaching or mounting the device onto the utility meter, the adjustable straps can be wrapped around the utility meter's circumference and then adjusting their length to ensure a secure and precise fit. These straps can be tightened to clamp the device firmly onto the meter, preventing any movement that could affect the accuracy or stability of the device. The adjustable feature of the straps allows for flexibility in accommodating different sizes and shapes of utility meters, ensuring that the device remains securely attached regardless of the meter's dimensions.

In embodiments, the method can further comprise the step of adjusting the height of the lens in the mount relative to the image sensor such that the plane of focus intersects the plane of the image sensor and the plane of the readout information on the meter display. For adjusting the height of the lens in the mount relative to the image sensor, the lens can be screwed in or out the screw the based adjusting means of the mount. The lens can be turned in the threaded screw to raise or lower the lens relative to the image sensor with fine precision to obtain a sharp imaging dataflow.

In embodiments, the method can further comprise the step of capturing the readout information on the meter display in an imaging dataflow. The captured imaging dataflow can be stored on a memory on the device or on a server connected to the device.

As used herein, the term "capturing" refers to the process of recording or acquiring visual information from a display on the utility meter, to generate an output imaging dataflow. This involves capturing the readout information shown on the meter display through imaging techniques, which may include photographic, video, or digital scanning methods. The captured visual data is then processed and integrated into an output imaging dataflow, enabling further analysis, storage, or transmission within a system.

In embodiments, the method can further comprise the step of lighting the readout information on the meter display prior to capturing the readout information in the imaging dataflow, preferably by lighting the illumination means of the housing. In embodiments, the illumination means are integrated in the front side of the housing. The illumination means can be integrated in the front side of the housing below, above or on the side of the part of the front side that is transparent to visible light. Preferably the illumination means can be integrated in the front side of the housing below the part of the front side that is transparent to visible light. By integrating the illumination means in the housing the emitted light is effectively dispersed, providing clear and even illumination of the display of the utility meter.

In embodiments, the method can further comprise the step of transmitting the output imaging dataflow from the camera unit to the processing unit.

In embodiments, the method can further comprise the step of storing the output imaging dataflow on a memory unit. After capturing the imaging dataflow, the method may comprise the step storing output imaging dataflow on a memory unit, which serves as a local storage solution within the device. This allows for temporary or long-term retention of the output imaging dataflow for later access or analysis. Alternatively, the method can further comprise the step of transmitting the output imaging dataflow to a datalogger, preferably a local datalogger, and uploading the output imaging dataflow on a server. Advantageously, the (local) datalogger ensures that if the device is in an environment where there is no reception of external communication technologies, the datalogger can be positioned in a location with sufficient reception of external communication technologies. The datalogger can establish its own private network, creating a signal strong enough to allow the device to communicatively connect to the datalogger and upload the data flow through it. A datalogger can be a device for collecting and recording data over time. This datalogger can compile and manage the output imaging dataflow before further processing. Additionally, the output imaging dataflow can be uploaded to a server, to enable centralized storage, remote access, and further processing or analysis. This serverbased approach facilitates data sharing, integration with other systems, and access by authorized users or applications from various locations. Alternatively, the processing unit can upload the output imaging dataflow to the server, without the need for a datalogger. This makes it possible to also deploy this device on sites without the need for additional equipment.

In embodiments, the method can further comprise the step of compressing the output imaging dataflow, preferably prior to uploading the output imaging dataflow on the server.

As used herein, the term "compressing" refers to the process of reducing the size of the output imaging dataflow by encoding it in a more efficient format, which minimizes the amount of storage space required and speeds up data transmission. Compression can be applied to the output imaging dataflow by removing redundancies or using algorithms to represent the output imaging dataflow more compactly. This process can be lossless, preserving all of the original output imaging dataflow, or lossy, where some data is discarded to achieve higher compression ratios. For example, Joint Photographic Experts Group (JPEG) and Portable Network Graphics (PNG) are known imaging dataflow formats that use compression techniques to reduce file sizes. JPEG uses lossy compression, which can reduce image quality slightly, while PNG uses lossless compression to maintain image quality.

In embodiments, on the server, Optical Character Recognition (OCR) software can be employed to extract meter readings from the captured imaging dataflow. The OCR software processes the imaging dataflow to identify and interpret the numerical information displayed on the utility meter. Additionally, the metadata associated with the imaging dataflow, which may include details such as the timestamp, camera settings, and device serial number, can be utilized to accurately link each imaging dataflow of the utility meter reading to the specific time, date, and meter from which the imaging dataflow was captured. This precise association ensures the integrity and traceability of the utility meter readings. By aggregating and analysing multiple instances of the imaging dataflow and their respective metadata, the device and method can generate a comprehensive view of consumption patterns over time, enabling trend visualization and detailed reporting of resource usage. This method significantly enhances the monitoring and analysis of resource consumption, facilitating better management and optimization of utility meters.

Another aspect of the present invention relates to a system comprising:
a utility meter with a display that includes readout information and
a device for reading out the display of the utility meter, comprising:
   - a housing configured for mounting the device onto the utility meter at an angle relative to the display; the housing comprising a plurality of walls forming the housing, including at least a top and a bottom wall;
   - a camera unit comprising an image sensor configured for capturing imaging data; wherein the image sensor is arranged on the bottom wall of the housing;
   - at least one reflective surface configured to reflect an image of the display towards the image sensor; wherein the reflective surface is arranged on the top wall of the housing, opposite to the image sensor;
   - at least one lens mounted on a mount, arranged between the image sensor and the reflective surface, wherein the lens is configured to focus the reflected image, and wherein the mount is configured to adjust an orientation of the lens to focus the reflected image onto the image sensor; and,
   - a processing unit configured to receive an output imaging dataflow, including the readout information from the display, from the camera unit, and storing the output imaging dataflow on a memory unit.

In embodiments, the processing unit is communicatively connected to the camera unit to receive an output imaging dataflow, including the readout information from the display of the utility meter, from the camera unit. In embodiments, the processing unit is communicatively connected to a memory unit to transmit and store the output imaging dataflow, including the readout information from the display of the utility meter, on the memory unit. In embodiments, the processing unit is communicatively connected to a server, a datalogger on the server, or a datalogger communicatively connected to the server, to transmit and store the output imaging dataflow, including the readout information from the display of the utility meter, on the server. In an embodiment, the system may comprise a set of instructions to attach the device or more specifically the housing of the device onto the utility meter in accordance with the method as described herein. Advantageously, the instructions further detail how to adjust the lens such that the focal plane intersects both the plane of the image sensor and the plane of the readout information on the meter display, enabling readout of the meter display.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment.

As used herein, the terms "comprising", "comprises" and "comprised of" as used herein are synonymous with "including", "
includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps. The singular forms "a", "an", and "the" include both singular and plural referents unless the context clearly dictates otherwise.

As used herein, relative terms, such as "left," "right," "front," "back," "top," "bottom," "over," "under," etc., are used for descriptive purposes and not necessarily for describing permanent relative positions. It is to be understood that such terms are interchangeable under appropriate circumstances and that the embodiment as described herein are capable of operation in other orientations than those illustrated or described herein unless the context clearly dictates otherwise.

Objects described herein as being "adjacent" to each other reflect a functional relationship between the described objects, that is, the term indicates the described objects must be adjacent in a way to perform a designated function which may be a direct (i.e. physical) or indirect (i.e. close to or near) contact, as appropriate for the context in which the phrase is used.

Objects described herein as being "connected" or "coupled" reflect a functional relationship between the described objects, that is, the terms indicate the described objects must be connected in a way to perform a designated function which may be a direct or indirect connection in an electrical or nonelectrical (i.e. physical) manner, as appropriate for the context in which the term is used.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical value or range endpoint by providing that a given value may be "a little above" or "a little below" said value or endpoint, depending on the specific context. Unless otherwise stated, use of the term "about" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

The recitation of numerical ranges by endpoints includes all numbers and fractions subsumed within the respective ranges, as well as the recited endpoints. Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

Reference in this specification may be made to devices, structures, systems, or methods that provide "improved" performance (e.g. increased or decreased results, depending on the context). It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

In addition, embodiments of the present disclosure may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the present disclosure may be implemented in software (e.g., instructions stored on non-transitory computer-readable medium) executable by one or more processing units, such as a microprocessor and/or application specific integrated circuits. As such, it should be noted that a plurality of hardware and software-based devices, as well as a plurality of different structural components may be utilized to implement the technology of the present disclosure. For example, "servers" and "computing devices" described in the specification can include one or more processing units, one or more computer-readable medium modules, one or more input/output interfaces, and various connections connecting the components.

## Claims

1. A device (1) for reading a utility meter with a display that includes readout information, the device comprising
- a housing (2) configured for mounting the device (1) onto the utility meter at an angle relative to the display; the housing (2) comprising a plurality of walls forming the housing (2), including at least a top wall (2a) and a bottom wall (2b);
- a camera unit (4) comprising an image sensor (4a) configured for capturing imaging data; wherein the image sensor (4a) is arranged on the bottom wall (2b) of the housing(2);
- at least one reflective surface (5) configured to reflect an image of the display towards the image sensor (4a); wherein the reflective surface (5) is arranged on the top wall (2a) of the housing(2), opposite to the image sensor (4a);
- at least one lens (6) mounted on a mount (7), arranged between the image sensor (4a) and the reflective surface (5), wherein the lens (6) is configured to focus the reflected image, and wherein the mount (7) is configured to adjust an orientation of the lens (6) to focus the reflected image onto the image sensor (4a); and,
- a processing unit configured to receive an output imaging dataflow, including the readout information from the display, from the camera unit (4), and storing the output imaging dataflow on a memory unit.

2. The device (1) according to claim 1, wherein the mount (7) is configured to position the lens (6) so that the plane of focus aligns with both the plane of the image sensor (4a) and the plane of the readout information on the meter display, in accordance with the Scheimpflug principle.

3. The device (1) according to any one of the preceding claims, wherein the reflective surface (5) comprises a flat mirror, a convex mirror and/or a concave mirror.

4. The device (1) according to any one of the preceding claims, wherein at least a part (2c) of the front side (2d) of the housing (2) that is oriented toward the meter display is transparent to visible light.

5. The device (1) according to any one of the preceding claims, further comprising an illumination means (3), preferably a lighting strip.

6. The device (1) according to any one of the preceding claims, wherein the mount (7) is configured to adjust the angle of the lens (6) relative to the camera unit (4a) and the reflective surface (5) between an angle of at least 0.5 to at most 5.0 degrees, preferably between 1.0 and 4.5 degrees, even more preferably between 1.5 and 4.0 degrees, more preferably between 2.0 and 3.5 degrees, even more preferably between 2.5 and 3.0 degrees.

7. The device (1) according to any of the preceding claims, further comprising an attachment means (8) configured to attach the housing (2) onto the utility meter in a way the image sensor (4a) is oriented substantially parallel to the meter display, with the front of the camera unit (4a) facing in the same direction as the meter display; and wherein the lens (6) is adjustable such that the focal plane intersects both the plane of the image sensor (4a) and the plane of the readout information on the meter display.

8. The device (1) according to any of the preceding claims, further comprising a server configured for receiving and storing the output imaging dataflow, and a datalink communicatively connecting the processing unit and the server and configured for transmitting the output imaging dataflow to the server.

9. The device (1) according to any of the preceding claims, wherein the camera unit (4) comprises a printed circuit board camera.

10. A method for mounting a device (1) according to any of the preceding claims on a utility meter with a display that includes readout information, the method comprising the steps of:
- providing the device (1);
- positioning the housing (2) of the device (1) on a surface of the utility meter in a way that the image sensor (4a) is oriented substantially parallel to the utility meter display and the front of the camera unit (4) is facing in the same orientation as the meter display; and,
- adjusting an orientation of the mount (7) of the device (1), thereby orienting the lens (6) such that the plane of focus intersects the plane of the image sensor (4a) and the plane of the readout information on the meter display.

11. The method according to claim 10, further comprising the step of capturing the readout information on the utility meter display in an imaging dataflow.

12. The method according to claim 11, further comprising the step of lighting the readout information on the utility meter display prior to capturing the readout information in the imaging dataflow.

13. The method according to any one of claims 10 to 12, further comprising the steps of transmitting the output imaging dataflow from the camera unit (4) to the processing unit; and storing the output imaging dataflow on a memory unit and/or transmitting the output imaging dataflow to a datalogger and uploading the output imaging dataflow on a server through a datalink.

14. A system comprising:
- a utility meter comprising a display that includes readout information; and
- a device (1) for reading the display of the utility meter, comprising:
- a housing (2) configured for mounting the device (1) onto the utility meter at an angle relative to the display; the housing (2) comprising a plurality of walls forming the housing (2), including at least a top wall (2a) and a bottom wall (2b);
- a camera unit (4) comprising an image sensor (4a) configured for capturing imaging data; wherein the image sensor (4a) is arranged on the bottom wall (2b) of the housing(2);
- at least one reflective surface (5) configured to reflect an image of the display towards the image sensor (4a); wherein the reflective surface (5) is arranged on the top wall (2a) of the housing (2), opposite to the image sensor (4a);
- at least one lens (6) mounted on a mount (7), arranged between the image sensor (4a) and the reflective surface (5), wherein the lens (6) is configured to focus the reflected image, and wherein the mount (7) is configured to adjust an orientation of the lens (6) to focus the reflected image onto the image sensor (4a); and,
- a processing unit configured to receive an output imaging dataflow, including the readout information from the display, from the camera unit (4), and storing the output imaging dataflow on a memory unit.

15. The system according to claim 14, wherein the device (1) further comprises an attachment means (8) configured to attach the device (1) onto the utility meter in a way the the image sensor (4a) is oriented substantially parallel to the meter display, with the front of the camera unit (4) facing in the same direction as the meter display; and wherein the lens (6) is adjustable such that the focal plane intersects both the plane of the image sensor (4a) and the plane of the readout information on the meter display.
